# DEMANDE DE BREVET EUROPEEN

(11) **EP 4 467 404 A1**
(43) Date de publication de la demande: **27.11.2024**
(21) Numéro de dépôt: 24176426.5
(22) Date de dépôt: 16.05.2024
(51) Int. Cl.: B60T 13/14, B60T 13/74, B60T 11/28, B60T 13/68, B60T 15/02, B60T 15/04

(54) **SYSTÈME DE FREINAGE HYDRAULIQUE COMPORTANT UN DISPOSITIF DE FREIN DE PARKING**

(30) Priorité: 22.05.2023 FR 2304998
(71) Demandeur: Renault s.a.s, 92100 Boulogne Billancourt (FR)
(72) Inventeur: GOUHIER, Nicolas, 91978 Les Ulis (FR); LE-JEUNE, Yoann, 91940 LES ULIS (FR)

(57) **Abrégé**

L'invention concerne un système (12) de freinage pour un véhicule automobile comportant :
- un frein (18) à disque comportant un étrier (22) dans lequel un patin (40) de frein est susceptible d'être serré par mise sous pression d'une chambre (36) hydraulique ;
- un maître-cylindre (44) raccordé à la chambre (36) d'étrier ;
- un dispositif (60) de frein de parking qui est interposé entre le maître-cylindre (44) et la chambre (36) d'étrier ;
caractérisé en ce que le dispositif (60) de frein de parking comporte un cylindre (62) de parking comportant une chambre (66) de travail à volume variable délimitée par un piston (64) de parking coulissant, le piston (64) de parking coulissant entre une position de service et une position de parking.

## Description

### DOMAINE TECHNIQUE DE L'INVENTION

L'invention concerne un système de freinage pour un véhicule automobile comportant :
- au moins un frein à disque comportant un étrier dans lequel au moins un patin de frein est susceptible d'être serré contre un disque par mise sous pression d'un liquide de freinage dans au moins une chambre hydraulique de l'étrier, dite « chambre d'étrier » ;
- un maître-cylindre qui est raccordé à chaque chambre d'étrier par l'intermédiaire d'un circuit hydraulique ;
- un dispositif de frein de parking qui est interposé dans le circuit hydraulique entre le maître-cylindre et l'au moins une chambre d'étrier du frein à disque associé et qui est susceptible de mettre sous pression la chambre d'étrier indépendamment du maître-cylindre pour serrer le patin de frein contre le disque.

### ARRIERE PLAN TECHNIQUE DE L'INVENTION

Pour pouvoir freiner le véhicule pendant qu'il roule, il est connu d'utiliser un frein de service. Les freins de services comportent généralement des freins à disque.

Les freins à disque mis en oeuvre sur les véhicules automobiles, présentent généralement des disques dont la rotation est associée à celle des roues du véhicule et des éléments de friction, par exemple des patins de frein, qui sont appliqués sur les disques lors du freinage pour ralentir la rotation de ceux-ci.

Pour exercer le freinage, un dispositif de vérin hydraulique est généralement prévu, actionnant un piston lié aux patins de frein. Ce piston vient serrer les patins contre le disque sous l'action du liquide de frein envoyé dans le vérin quand une commande de freinage est actionnée. Au contraire, quand aucune commande de freinage n'est actionnée, aucune force ne vient serrer les plaquettes de frein contre le disque qui peut alors tourner librement.

Un tel frein de service est généralement commandé par le conducteur du véhicule au moyen d'une pédale de frein.

Certains dispositifs d'assistance à la conduite peuvent aussi commander automatiquement le frein de service, tels que les correcteurs électroniques de trajectoire, aussi connus sous leur acronyme anglais d'ESP signifiant Electronic Stability Program.

Par ailleurs, il est aussi connu d'utiliser un frein de parking pour arrêter durablement un véhicule en bloquant ses roues, notamment lorsque le véhicule est garé et arrêté. Un tel frein de parking est généralement formé par un système distinct du frein de service.

Il s'agit par exemple d'un frein à tambour comportant un tambour tournant avec la roue du véhicule et renfermant des segments de freins destinés à être serrés radialement contre la paroi cylindrique interne du tambour.

On connaît aussi des étriers de freins à disque munis de patins de frein distincts des patins de frein utilisés pour le frein de service. Ces patins de freins sont actionnés par un moteur électrique au lieu d'être actionnés par un piston de vérin hydraulique.

Cependant, ces dispositifs de frein de parking sont encombrants et onéreux.

### BREF RESUME DE L'INVENTION

La présente invention propose un système de freinage pour un véhicule automobile comportant :
- au moins un frein à disque comportant un étrier dans lequel au moins un patin de frein est susceptible d'être contre un disque par mise sous pression d'un liquide de freinage dans au moins une chambre hydraulique de l'étrier, dite « chambre d'étrier » ;
- un maître-cylindre qui est raccordé à chaque chambre d'étrier par l'intermédiaire d'un circuit hydraulique ;
- un dispositif de frein de parking qui est interposé dans le circuit hydraulique entre le maître-cylindre et l'au moins une chambre d'étrier du frein à disque associé et qui est susceptible de mettre sous pression la chambre d'étrier indépendamment du maître-cylindre pour serrer le patin de frein contre le disque ;
caractérisé en ce que le dispositif de frein de parking comporte un cylindre de parking comportant une chambre de travail à volume variable délimitée par un piston de parking coulissant, le piston de parking coulissant entre une position de service dans laquelle le maître-cylindre communique avec l'au moins une chambre d'étrier via la chambre de travail pour commander le frein à disque, et une position de parking dans laquelle le volume de la chambre de travail est réduit pour mettre l'au moins une chambre d'étrier sous pression.

Selon une autre caractéristique de l'invention, lorsque le piston de parking atteint une position intermédiaire entre sa position de service et sa position de parking, il interrompt la communication entre le maître-cylindre et la chambre de travail.

Selon une autre caractéristique de l'invention, le cylindre de parking comporte un premier orifice, dit orifice amont, de raccordement au maître-cylindre et un deuxième orifice, dit orifice aval, de raccordement à l'au moins une chambre d'étrier, l'orifice amont étant situé à proximité du piston de parking dans sa position de service.

Selon une autre caractéristique de l'invention, une paroi du piston de parking obture l'orifice amont lors de son coulissement entre une position intermédiaire et sa position de parking.

Selon une autre caractéristique de l'invention, le piston de parking délimite dans le cylindre de parking la chambre de travail, d'une part, et une chambre de compensation, d'autre part, l'orifice amont débouchant dans la chambre de compensation lorsque le piston de parking coulisse entre une position intermédiaire et sa position de parking, de sorte que la pression de liquide de freinage dans le maître-cylindre demeure sensiblement inférieure à la pression dans l'au moins une chambre d'étrier lorsque le piston de parking occupe sa position de parking.

Selon une autre caractéristique de l'invention, les déplacements du piston de parking entre sa position de service et sa position de parking sont commandés par un moteur électrique.

Selon une autre caractéristique de l'invention, le moteur électrique entraîne le piston de parking par l'intermédiaire d'un dispositif de transmission de mouvement irréversible.

Selon une autre caractéristique de l'invention, le piston de parking est entraîné en coulissement par l'intermédiaire d'un dispositif à vis sans fin coopérant avec un écrou.

Selon une autre caractéristique de l'invention, le système de freinage comporte au moins deux freins à disque qui sont chacun relié au maître-cylindre par une branche distincte du circuit hydraulique, le système de freinage comportant deux dispositifs de frein de parking identiques qui sont interposés chacun dans une branche associée pour commander individuellement chaque frein à disque.

Selon une autre caractéristique de l'invention, chaque frein à disque comporte un étrier fixe comportant au moins deux chambres d'étrier agencées de part et d'autre du disque, la pression dans les deux chambres d'étrier d'un même frein à disque étant commandée conjointement par un même dispositif de frein de parking commun.

### BREVE DESCRIPTION DES FIGURES

D'autres caractéristiques et avantages de l'invention apparaitront au cours de la lecture de la description détaillée qui va suivre pour la compréhension de laquelle on se reportera aux dessins annexés brièvement décrits ci-après.

La figure 1 est une vue de dessus qui représente schématiquement un système de freinage réalisé selon les enseignements de l'invention embarqué dans un véhicule automobile à quatre roues.

La figure 2 est une vue en demi-coupe axiale, selon l'axe de rotation d'une roue, d'un frein à disque à étrier fixe qui équipe une roue du véhicule de la figure 1.

La figure 3 est une vue en coupe axiale, selon l'axe de coulissement du piston de parking, qui représente un dispositif de frein de parking qui appartient au système de freinage de la figure 1 et qui est associé au frein à disque de la figure 2, un piston de parking du dispositif de frein de parking occupant une position de service.

La figure 4 est une vue similaire à celle de la figure 3 dans laquelle le piston de parking occupe une position de parking.

### DESCRIPTION DETAILLEE DES FIGURES

Dans la suite de la description, des éléments présentant une structure identique ou des fonctions analogues seront désignés par des mêmes références.

Dans la suite de la description, on adoptera à titre non limitatif les orientations suivantes :
- axiale qui est parallèle à l'axe « A » de la roue ;
- radiales qui sont orthogonalement par rapport à l'axe « A » de de la roue depuis ledit axe « A » de l'intérieur, à proximité de l'axe « A », vers l'extérieur.

Dans la suite de la description, le terme amont sera utilisé pour désigner une partie de circuit hydraulique proche d'un élément générateur de pression, tel qu'un maître-cylindre, tandis que le terme aval sera utilisé pour désigner une partie du circuit hydraulique proche des chambres d'étrier.

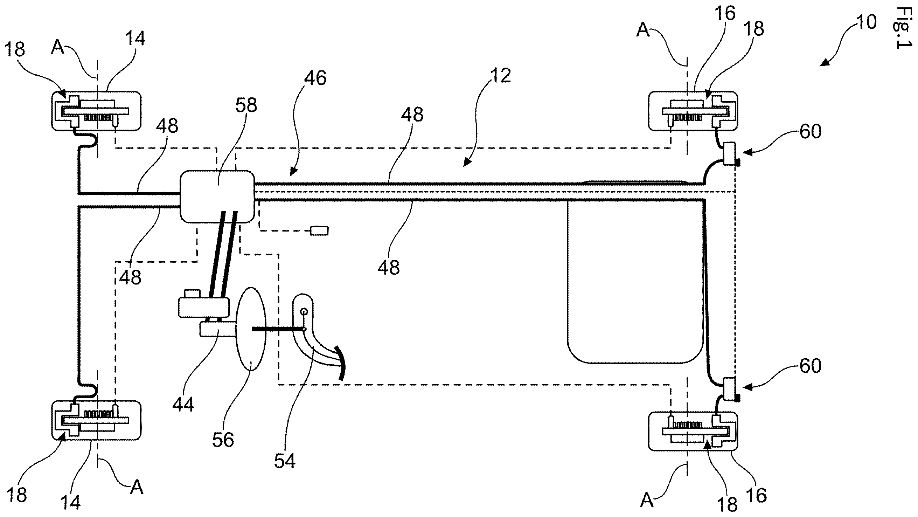

On a représenté schématiquement à la figure 1 un véhicule 10 automobile équipé d'un système 12 de freinage. Le véhicule 10 automobile comporte deux roues 14 avant et deux roues 16 arrière. Chaque roue 14, 16 est montée rotative autour d'un axe « A » associé.

Le système 12 de freinage comporte au moins un frein 18 à disque associé à une roue 14, 16. Le système 12 de freinage comporte de préférence au moins deux freins 18 à disque associés chacun à une roue 16 arrière. Dans l'exemple représenté, chaque roue 14, 16 est équipée d'un frein 18 à disque associé.

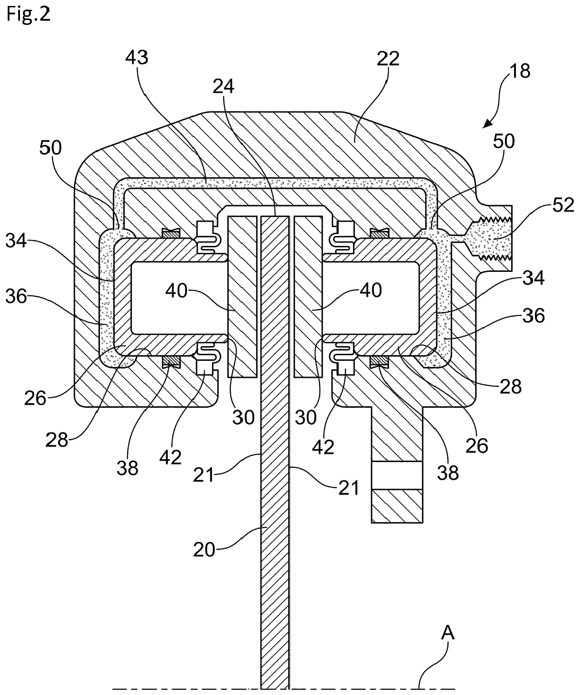

Comme représenté à la figure 2, chaque frein 10 à disque comporte un disque 20 monté solidaire en rotation avec la roue 14, 16 associée autour de son axe « A ». Le disque 20 s'étend ainsi orthogonalement à l'axe « A ». Le disque 20 et la roue 14, 16 sont ainsi coaxiales d'axe « A ». Le disque 20 est délimité axialement par deux faces opposées. Il est délimité radialement par un bord 24 périphérique circulaire.

Chaque frein 10 à disque comporte en outre au moins étrier 22 qui chevauche le bord 24 périphérique du disque 20. Au moins un piston 26 d'étrier est monté coulissant axialement dans un cylindre 28 d'étrier associé. Le piston 26 d'étrier est monté coulissant entre une position de repos et une position de freinage dans laquelle il est rapproché du disque 20 par rapport à sa position de repos.

Le piston 26 d'étrier présente une face 30 externe tournée vers une face 21 du disque 20 et une face 34 interne opposée qui délimite avec le cylindre 28 d'étrier une chambre 36 hydraulique de l'étrier 22, dite chambre 36 d'étrier.

Un joint 38 annulaire est interposé entre une paroi cylindrique du piston 26 d'étrier et une paroi cylindrique complémentaire du cylindre 28 d'étrier pour garantir l'étanchéité de la chambre 36 d'étrier.

Chaque frein 18 à disque comporte en outre deux patins 40 de frein qui sont agencés axialement en vis-à-vis de part et d'autre du disque 20. Les patins 40 de frein sont montés coulissant axialement par rapport au disque 20 entre une position inactive dans laquelle ils sont écartés des faces 22 du disque 20 et une position active de freinage dans laquelle ils sont serrés contre les faces 21 pour enserrer le disque 20.

L'un des patins 40 de frein est interposé entre la face 30 externe du piston 26 d'étrier et le disque 20. Ce patin 40 de frein est monté coulissant axialement dans l'étrier 22. Le patin 40 de frein est guidé par l'étrier 22. Le patin 40 de frein est avantageusement rendu solidaire axialement du piston 26 par tout moyen connu. En variante, le patin 40 de frein est monté libre en coulissement par rapport au piston 26 d'étrier de sorte que le piston 26 d'étrier commande uniquement le coulissement du patin 40 de frein vers sa position active, le patin 40 de frein étant rappelé élastiquement par un organe de rappel élastique (non représenté) vers sa position inactive.

Le serrage du patin 40 de frein contre le disque 20 est commandé par mise sous pression d'un liquide de freinage dans la chambre 36 d'étrier qui provoque le coulissement du piston 26 d'étrier dans une position de freinage vers le disque 20. Le piston 26 d'étrier est rappelé élastiquement vers une position de repos par un organe élastique, qui est ici formé par le joint annulaire 38. Un soufflet 42 est agencé pour empêcher des particules de pénétrer dans le cylindre 28 d'étrier.

Dans l'exemple représenté à la figure 2, il s'agit ici d'un frein 18 à disque à étrier 22 fixe. S'agissant ici d'un étrier 22 fixe par rapport au disque 20, le frein 18 à disque comporte au moins deux pistons 26 d'étrier agencés de part et d'autre du disque 20 pour serrer les deux patins 40 de frein. La structure et le fonctionnement des organes de commande du deuxième piston 26 d'étrier sont identiques à ce qui a été décrit précédemment par symétrie par rapport au plan du disque 20. Le deuxième piston 26 d'étrier est notamment commandé en coulissement par la pression d'un liquide de freinage dans une deuxième chambre 36 d'étrier. Le frein 18 à disque comporte ainsi deux chambres 36 d'étrier agencées de part et d'autre du disque 20. Les deux chambres 36 d'étrier communiquent ici par l'intermédiaire d'une conduite 43 de manière à ce que le liquide de freinage présente simultanément et en permanence la même pression dans les deux chambres 36 d'étrier.

En variante non représentée de l'invention, au moins certaines roues sont équipées d'un frein à disque à étrier flottant. Dans un tel frein à disque, un seul côté de l'étrier est équipé de piston qui pousse le premier patin de frein. L'étrier est monté coulissant axialement et le deuxième patin de frein agencé à l'opposé du piston par rapport au disque est destiné à être serré contre le disque par coulissement de l'étrier après que le piston ait serré le premier patin de frein contre le disque.

Le système 12 de freinage comporte un maître-cylindre 44 qui est raccordé à chaque chambre 36 d'étrier de chaque frein 18 à disque par l'intermédiaire d'un circuit hydraulique 46.

Plus particulièrement, le circuit 46 hydraulique se ramifie en plusieurs branches 48 dont chacune est raccordée à un frein 18 à disque associé. Ainsi, chaque frein 18 à disque est relié au maître-cylindre 44 par une branche distincte du circuit 46 hydraulique. Dans l'exemple représenté à la figure 1, deux branches 48 sont raccordées à chacun des freins 18 à disque associés aux roues 16 arrière et deux branches 48 sont raccordées à chacun des freins 18 à disque associés aux roues 14 avant.

Chaque branche 48 est plus particulièrement raccordée à chaque chambre 36 d'étrier du frein 18 à disque associé par l'intermédiaire d'un orifice 50 d'entrée de chaque chambre 36 d'étrier.

Dans le cas d'un étrier 22 fixe, tel que représenté à la figure 2, les deux chambres 36 d'étrier sont toutes les deux raccordée à la branche 48 du circuit 44 hydraulique du système 12 de freinage par l'intermédiaire d'un orifice 52 d'alimentation commun qui est ici agencé dans l'étrier 22.

Lors du fonctionnement du système 12 de freinage dans un mode « frein de service », la pression de liquide de freinage dans les chambres 36 d'étrier est commandée par le conducteur au moyen d'une pédale 54 de frein qui pilote le maître-cylindre 44. Généralement un servofrein 56 est interposé entre la pédale 54 et le maître-cylindre 44 pour assister le conducteur.

Dans ce mode « frein de service », la pression du liquide de freinage dans les chambres 36 d'étrier peut aussi être commandée par un dispositif 58 d'assistance automatique à la conduite, tel qu'un dispositif « ESP ». Un tel dispositif 58 d'assistance comporte un organe qui permet d'agir sur la pression du liquide de freinage indépendamment du maître-cylindre 44. Il s'agit généralement d'une pompe qui est interposée dans le circuit 46 hydraulique entre le maître-cylindre 44 et les branches 48. La pompe permet notamment de faire varier la quantité de liquide présent dans le circuit hydraulique pour faire varier la pression du liquide de freinage dans les chambres 36 d'étrier.

L'invention propose d'utiliser le système 12 de freinage dans un mode « frein de parking » afin d'actionner les freins 18 à disque de manière prolongée, notamment lorsque le véhicule est garé moteur à l'arrêt.

A cet effet, le système 12 de freinage comporte au moins un dispositif 60 de frein de parking. Le dispositif 60 de frein de parking est interposé dans le circuit 46 hydraulique entre le maître-cylindre 44 et l'au moins une chambre 36 d'étrier du frein 18 à disque associé.

De préférence, lorsque le véhicule est équipé d'un dispositif 58 d'assistance à la conduite agissant sur le système 12 de freinage en mode « frein de service », comme c'est ici le cas, chaque dispositif 60 de frein de parking est interposé entre le dispositif 58 d'assistance et l'au moins une chambre 36 d'étrier.

Le dispositif 60 de frein de parking est susceptible de mettre sous pression la chambre 36 d'étrier indépendamment du maître-cylindre 44 pour serrer le patin 40 de frein contre le disque 20.

Le dispositif 60 de frein de parking est ici interposé dans la branche 48 qui alimente le frein 18 à disque associé. Chaque dispositif 60 de frein de parking est ainsi associé uniquement au frein 18 à disque alimenté par ladite branche 48.

Dans l'exemple non limitatif représenté à la figure 1, le système 12 de freinage comporte deux dispositifs 60 de frein de parking identiques dont chacun est associé à un frein 18 à disque de roue 16 arrière et qui sont interposés chacun dans une branche 48 associée pour commander individuellement chaque frein 18 à disque associé aux roues 16 arrière.

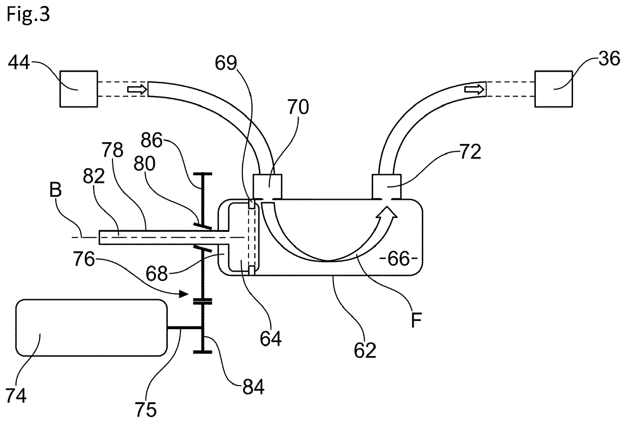

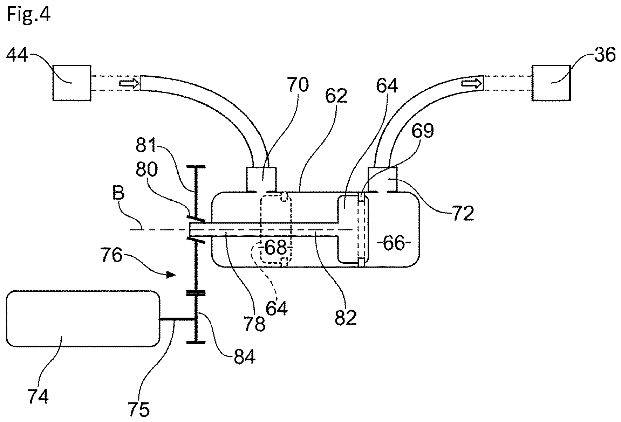

Comme représenté aux figures 3 et 4, chaque dispositif 60 de frein de parking comporte un cylindre, dit par la suite cylindre 62 de parking, dans lequel un piston, dit par la suite piston 64 de parking, est monté coulissant. Le piston 64 de parking divise le cylindre 62 de parking de manière étanche en deux chambres 66, 68 au moyen d'un joint 69 annulaire agencé autour du piston 64 de parking.

Il délimite notamment une chambre 66 de travail et une chambre 68 de compensation. La chambre 66 de travail présente un volume variable en fonction de la position du piston 64 de parking.

Le cylindre 62 de parking comporte un premier orifice 70 de raccordement au maître-cylindre 44, dit orifice 70 amont par la suite, et un deuxième orifice 72 de raccordement à l'au moins une chambre 36 d'étrier du frein 18 à disque associé, dit orifice 72 aval par la suite.

Le piston 64 de parking est monté coulissant entre une position de service, illustrée à la figure 3, dans laquelle le maître-cylindre 44 communique directement avec chaque chambre 36 d'étrier du frein 18 à disque associé via la chambre 66 de travail comme indiqué par la flèche « F », et une position de parking, illustrée à la figure 4, dans laquelle le volume de la chambre 66 de travail est réduit pour mettre sous pression chaque chambre 36 d'étrier du frein 18 à disque associé.

En position de service du piston 64 de parking, le maître-cylindre 44 est susceptible de commander directement la pression dans les chambres 36 d'étrier du frein 18 à disque associé via la chambre 66 de travail. Pour ce faire, dans cette position de service, l'orifice 70 amont et l'orifice 72 aval débouchent tous les deux dans la chambre 66 de travail.

L'orifice 70 amont et l'orifice 72 aval sont agencés de manière que, lorsque le piston 64 de parking quitte sa position de service, le piston 64 de parking coupe la communication entre le maître-cylindre 44 et la chambre 66 de travail.

Pour ce faire, dans le mode de réalisation représenté aux figures 3 et 4, l'orifice 70 amont est ici agencé dans une paroi cylindrique du cylindre 62 de parking, à proximité immédiate du piston 64 de parking dans sa position de service. Ainsi, lorsque le piston 64 de parking a coulissé depuis sa position de service jusqu'à une position intermédiaire, correspondant sensiblement à une course de la dimension de l'orifice 70 amont, l'orifice 70 amont ne débouche plus dans la chambre 66 de travail, comme représenté en traits interrompus à la figure 4. En d'autres termes, lorsque le joint 69 du piston 64 de parking dépasse l'orifice 70 amont, l'orifice 70 amont ne communique plus avec la chambre 66 de travail.

Dans le mode de réalisation représenté aux figures 3 et 4, lorsque le piston 64 de parking coulisse entre sa position intermédiaire et sa position de parking, l'orifice 70 amont débouche dans la chambre 68 de compensation, de sorte que la pression dans le maître-cylindre 44 demeure sensiblement inférieure à la pression dans la chambre 36 d'étrier lorsque le piston 64 de parking occupe sa position de parking. Dans ce cas, le liquide de frein situé dans la partie du circuit 46 hydraulique située directement en amont du dispositif 60 de frein de parking diminue. Cette diminution de pression peut être compensée automatiquement par une réserve de liquide de frein contenue par exemple par un vase d'expansion du maître-cylindre 44 dont le bouchon permet une mise à l'air et assure la pression atmosphérique dans le circuit 46 lorsqu'il n'est pas actionné par le frein de service.

En variante non représentée de l'invention, lorsque le piston 64 de parking coulisse entre sa position intermédiaire et sa position de parking, une paroi du piston obture constamment l'orifice 70 amont. Il s'agit par exemple d'une jupe du piston 64 de parking. Ainsi, la pression du liquide de frein dans la partie du circuit 46 hydraulique située directement en amont du dispositif 60 de frein de parking demeure constante lors du coulissement du piston 64 de parking.

Selon un autre aspect de l'invention, les déplacements du piston 64 de parking entre sa position de service et sa position de parking sont commandés par un moteur 74 électrique.

Pour permettre de bloquer de manière passive, c'est-à-dire sans dépense d'énergie, le piston 64 de parking aussi bien dans sa position de service que dans sa position de parking indépendamment de la pression exercée sur le piston 64 de parking, un arbre 75 du moteur 74 électrique entraîne le piston 64 de parking par l'intermédiaire d'un dispositif 76 de transmission de mouvement irréversible. Le terme « irréversible » signifie que le mouvement ne peut être transmis que de l'arbre 75 moteur vers le piston 64 de parking mais pas en sens inverse.

Le dispositif 76 de transmission comporte par exemple un dispositif vis-écrou. Il s'agit d'un dispositif 76 de transmission qui comporte une vis 78 sans fin qui coopère avec un écrou 80. La vis 78 sans fin est solidaire en translation avec l'un parmi le moteur 74 électrique ou le piston 64 de parking, tandis que l'écrou 80 est solidaire en translation avec l'autre parmi le moteur 74 électrique ou le piston 64 de parking.

Dans le mode réalisation représenté aux figures, la vis 78 sans fin est solidaire en coulissant avec le piston 64 de parking. La vis 78 sans fin appartient plus particulièrement à une tige 82 de commande du piston 64 de parking. La vis 78 sans fin s'étend selon un axe « B » parallèle à la direction de coulissement du piston 64 de parking.

L'écrou 80 est quant à lui solidaire en translation avec le moteur 74 électrique. L'écrou 80 est monté rotatif autour de l'axe « B » de manière à être vissé sur la vis78 sans fin. L'écrou 80 est ici entraîné en rotation dans les deux sens par l'arbre 75 moteur par l'intermédiaire d'un mécanisme d'engrenage comportant par exemple un pignon 84 menant monté solidaire en rotation avec l'arbre 75 moteur qui engrène avec une roue 86 dentée dont un moyeu est formé par l'écrou 80.

En variante non représentée de l'invention, le dispositif de transmission irréversible est formé par un dispositif à vis sans fin coopérant avec une crémaillère. Dans ce cas, la crémaillère est solidaire en coulissement avec le piston de parking tandis que la vis sans fin est entraînée en rotation par le moteur électrique.

Selon une autre variante non représentée de l'invention, le dispositif de transmission irréversible est formé par un dispositif à came et à galet. Dans ce cas, le galet est solidaire en coulissement avec le piston de parking, tandis que la came est entraînée en déplacement par le moteur électrique. Pour pouvoir commander le coulissement du piston dans les deux sens, le piston de parking est soit rappelé élastiquement dans l'un de ses deux positions parmi la position de service ou la position de parking, soit la came comporte une rainure qui permet de commander les déplacements du galet dans les deux sens.

Lors de l'utilisation du système 12 de freinage en mode « frein de service », le piston 64 de parking occupe sa position de service représentée à la figure 3. Dans cette position, le maître-cylindre 44 et le dispositif 58 d'assistance sont susceptibles de commander directement les freins 18 à disque en faisant varier la pression de liquide de freinage dans les chambres 36 d'étrier via la chambre 66 de travail.

Lorsque le mode « frein de parking » est activé, le piston 64 de parking est commandé en coulissement par l'intermédiaire du moteur 74 électrique.

Lorsque le piston 64 de parking atteint sa position intermédiaire, il interrompt la communication entre la partie amont du circuit 46 hydraulique, comportant le maître-cylindre 44 et le dispositif 58 d'assistance, et la partie aval du circuit 46 hydraulique, comportant la ou les chambres 36 d'étrier associées.

Sur le reste de sa course depuis sa position intermédiaire jusqu'à sa position de parking, la chambre 66 de travail communique uniquement avec la ou les chambres 36 d'étrier du frein 18 à disque associé. Dans la position intermédiaire, la chambre 66 de travail, la ou les chambres 36 d'étrier et les conduites associées présentent un espace clos renfermant une quantité déterminée de liquide de freinage. Le coulissement du piston 64 de parking réduit le volume de la chambre 66 de travail et donc le volume dudit espace clos cependant que la quantité de liquide de freinage reste inchangée. Il s'ensuit que la pression du liquide de freinage augmente dans ledit espace clos et, par conséquence, dans la ou les chambres 36 d'étrier.

Au contraire, dans la partie du circuit 46 hydraulique située en amont, lors de la course du piston 64 de parking entre sa position intermédiaire et sa position de parking, la pression de liquide de freinage n'augmente pas. Ceci permet d'éviter de mettre sous pression la totalité du circuit 46 hydraulique lors de l'utilisation du système 12 de freinage en mode « frein de parking ». Ceci permet notamment, entre autres avantages, d'économiser de l'énergie, d'éviter d'endommager certains organes du système 12 de freinage et de réduire les risques de dysfonctionnement.

Ce dispositif 60 de frein de parking est particulièrement avantageux en association avec des freins 18 à disque à étrier 22 fixe, comme c'est ici le cas. En effet, en commandant directement la pression du liquide de freinage, le coulissement du piston 64 de parking du dispositif 60 de frein de parking permet de commander conjointement la pression dans les deux chambres 36 d'étrier. Ainsi, les deux pistons 26 d'étrier d'un même frein 18 à disque sont commandés simultanément par un même dispositif 60 de frein de parking commun.

Cependant, ce dispositif 60 de frein de parking est aussi applicable à des freins à disque à étrier flottant, comme expliqué précédemment.

Bien qu'il soit préférable que chaque dispositif 60 de frein de parking soit agencé à proximité du frein 18 à disque qu'il commande, notamment pour réduire les pertes d'énergie, l'invention permet tout de même d'éloigner physiquement le dispositif 60 de frein de parking du frein 18 à disque qu'il commande. Cela permet notamment de donner une certaine liberté de conception malgré l'encombrement des nombreux organes qui doivent être agencés à proximité des roues 14, 16 du véhicule.

## Revendications

1. Système (12) de freinage pour un véhicule automobile comportant :
- au moins un frein (18) à disque comportant un étrier (22) dans lequel au moins un patin (40) de frein est susceptible d'être serré contre un disque (20) par mise sous pression d'un liquide de freinage dans au moins une chambre (36) hydraulique de l'étrier (22), dite « chambre (36) d'étrier » ;
- un maître-cylindre (44) qui est raccordé à chaque chambre (36) d'étrier par l'intermédiaire d'un circuit (46) hydraulique ;
- un dispositif (60) de frein de parking qui est interposé dans le circuit (46) hydraulique entre le maître-cylindre (44) et l'au moins une chambre (36) d'étrier du frein (18) à disque associé et qui est susceptible de mettre sous pression la chambre (36) d'étrier indépendamment du maître-cylindre (44) pour serrer le patin (40) de frein contre le disque (20) ;
**caractérisé en ce que** le dispositif (60) de frein de parking comporte un cylindre (62) de parking comportant une chambre (66) de travail à volume variable délimitée par un piston (64) de parking coulissant, le piston (64) de parking coulissant entre une position de service dans laquelle le maître-cylindre (44) communique avec l'au moins une chambre (36) d'étrier via la chambre (66) de travail pour commander le frein (18) à disque, et une position de parking dans laquelle le volume de la chambre (66) de travail est réduit pour mettre l'au moins une chambre (36) d'étrier sous pression.

2. Système (12) de freinage selon la revendication précédente, **caractérisé en ce que** lorsque le piston (64) de parking atteint une position intermédiaire entre sa position de service et sa position de parking, il interrompt la communication entre le maître-cylindre (44) et la chambre (66) de travail.

3. Système (12) selon la revendication précédente, **caractérisé en ce que** le cylindre (62) de parking comporte un premier orifice, dit orifice (70) amont, de raccordement au maître-cylindre (44) et un deuxième orifice, dit orifice (72) aval, de raccordement à l'au moins une chambre (36) d'étrier, l'orifice (70) amont étant situé à proximité du piston (64) de parking dans sa position de service.

4. Système (12) selon la revendication précédente, **caractérisé en ce qu'**une paroi du piston (64) de parking obture l'orifice (70) amont lors de son coulissement entre une position intermédiaire et sa position de parking.

5. Système (12) selon la revendication 3, **caractérisé en ce que** le piston (64) de parking délimite dans le cylindre (62) de parking la chambre (66) de travail, d'une part, et une chambre (68) de compensation, d'autre part, l'orifice (70) amont débouchant dans la chambre (68) de compensation lorsque le piston (64) de parking coulisse entre une position intermédiaire et sa position de parking, de sorte que la pression de liquide de freinage dans le maître-cylindre (44) demeure sensiblement inférieure à la pression dans l'au moins une chambre (36) d'étrier lorsque le piston (64) de parking occupe sa position de parking.

6. Système (12) selon l'une quelconque des revendications précédentes, **caractérisé en ce que** les déplacements du piston (64) de parking entre sa position de service et sa position de parking sont commandés par un moteur (74) électrique.

7. Système (12) selon la revendication précédente, **caractérisé en ce que** le moteur (74) électrique entraîne le piston (64) de parking par l'intermédiaire d'un dispositif (76) de transmission de mouvement irréversible.

8. Système (12) selon la revendication précédente, **caractérisé en ce que** le piston (64) de parking est entraîné en coulissement par l'intermédiaire d'un dispositif à vis (78) sans fin coopérant avec un écrou (80).

9. Système (12) selon l'une quelconque des revendications précédentes, **caractérisé en ce qu'**il comporte au moins deux freins (18) à disque qui sont chacun relié au maître-cylindre (44) par une branche (48) distincte du circuit (46) hydraulique, le système (12) de freinage comportant deux dispositifs (60) de frein de parking identiques qui sont interposés chacun dans une branche (48) associée pour commander individuellement chaque frein (18) à disque.

10. Système (12) selon l'une quelconque des revendications précédentes, **caractérisé en ce que** chaque frein (18) à disque comporte un étrier (22) fixe comportant au moins deux chambres (36) d'étrier agencées de part et d'autre du disque (20), la pression dans les deux chambres (36) d'étrier d'un même frein (18) à disque étant commandée conjointement par un même dispositif (60) de frein de parking commun.
